Europäisches Patentamt

European Patent Office

Office européen des brevets

(19)

(11) EP 0 881 568 A2

(12) EUROPEAN PATENT APPLICATION

(43) Date of publication:
02.12.1998 Bulletin 1998/49

(51) Int. Cl.$^6$: G06F 9/46

(21) Application number: 98201790.7

(22) Date of filing: 29.05.1998

(84) Designated Contracting States:
AT BE CH CY DE DK ES FI FR GB GR IE IT LI LU
MC NL PT SE
Designated Extension States:
AL LT LV MK RO SI

(30) Priority: 30.05.1997 IT MI971287

(71) Applicant: ABB SACE SPA
I-24100 Bergamo (IT)

(72) Inventors:
• Lorito, Fabrizio
  20135 Milano (IT)
• Mariani, Maurizio
  22100 Como (IT)

(74) Representative:
Giavarini, Francesco
ABB Ricerca S.p.A.
Viale Edison, 50
20099 Sesto San Giovanni (MI) (IT)

(54) Procedure for partitioning control functions in distributed systems.

(57)     Procedure for partitioning control functions in distributed systems, particularly for the execution of sequential logic functions, the distinctive feature of which consists in the fact that it includes the phases that consist in:

starting with a representation, in the form of a weighted graph with nodes and arcs, of global control logic functions for a distributed system expressed in a formal language, completing the graph with further nodes representing the devices physically present in the system and arcs representing a logical connection between the existing devices and nodes in the weighted graph;

automatically partitioning the weighted graph, now completed, assigning each node of the graph to the devices present in the system obtaining device functions; and
compiling the device functions, having previously added synchronisation codes for reinserting the execution sequence present in the control logic functions.

Fig. 2

**Description**

The present invention concerns a procedure for partitioning control functions in distributed systems. In particular, the present invention concerns a procedure for partitioning control functions that is particularly, but not exclusively, suited to the control of high, medium and low voltage distribution networks.

As is known, the control of a multiplicity of remote devices is normally implemented in, for example, a high, medium or low voltage network, by a central control unit for controlling the various different devices (such as sensors and actuators for example) using point to point connections.

The central control unit collects the information on the system from the field (status of circuit breakers, measurements of electrical parameters, current sensors, voltage sensors and generators, etc.), carries out suitable processing on the data obtained and is able, if required, to send commands automatically to the actuators upon the occurrence of given events.

It is, therefore, currently necessarily to have a central control unit physically present to provide global command of the system with consequent increases in costs, limited operating efficiency (where the response times of the peripheral devices controlled are concerned), as well as problems of reliability for the system since its control is entrusted entirely to a single controller.

An improvement on the technical solution described above is obtained by the use of so-called "distributed systems" that enable the central program to be executed on a multiplicity of different intelligent devices (i.e. equipped with a microprocessor and suitable software), which cap even be located in remote positions from one another and are connected by a dedicated communication line. This communication line is generally known as a "field bus".

A central control program for the different devices must therefore be partitioned manually in order to assign each device the portion of program code for it that must be executed by that particular device.

In addition, the installer of the system must physically create the programs for each device, which is to say the relevant portion of program code for controlling its actuation, starting from the main program present in the control unit.

This involves significant costs in man-hours and difficulties of implementation.

The main task of the present invention is therefore to develop a procedure for partitioning control functions in distributed systems that is implemented in automatic mode without requiring manual intervention to create the dedicated programs for each device.

One aim of the present invention, as part of this task, is to develop a procedure for partitioning control functions in distributed systems that makes it possible to eliminate the central control unit.

Another aim of the present invention is to develop a procedure for partitioning control functions in distributed systems that enables different peripheral devices to execute their related program portions in parallel.

A further aim of the present invention is to develop a procedure for partitioning control functions in distributed systems that makes it possible to reduce the execution times of the related program portions, optimising the response times of the individual devices.

An additional though not the final aim of the present invention is to develop a procedure for partitioning control functions that is highly reliable, relatively easy to implement and offers competitive costs.

This task, together with these and other aims that are set forth in greater detail hereinafter, are achieved by a procedure for partitioning control functions in distributed systems, particularly for the execution of sequential logic functions, characterised by the fact that it includes the phases that consist in:

starting with a representation, in the form of a weighted graph containing nodes and arcs, of global control logic functions for a distributed system expressed in a formal language,

completing the graph with further nodes representing the devices physically present in the system and arcs representing a logical connection between the existing said devices and said nodes in the said weighted graph;

automatically partitioning the said weighted graph, now completed, assigning each node of the said graph to the devices present in the system obtaining device functions; and compiling the said device functions, having previously added synchronisation codes for reinserting the execution sequence present in the said control logic functions.

Further characteristics and advantages of the invention will emerge from the description of a preferred but not exclusive form of the procedure as in the invention, illustrated purely by way of example without limiting any other possible form of the invention in the attached drawings, in which:

Fig. 1 is a block diagram of a generic distributed system in which the different devices are connected to one another by a field bus;
Fig. 2 is a block diagram of the various different phases in the automatic partitioning procedure as in the present invention;
Fig. 3 is a representation, provided by way of example, of a weighted graph in which the nodes are assigned to the different devices and program variables of the distributed system, as in the present invention;
Fig. 4 is a block diagram of an example phase in which the graph is partitioned as in Fig. 3; and

Fig. 5 is a block diagram of the added synchronisation code phase for timing the execution of different program portions assigned to the related distributed devices.

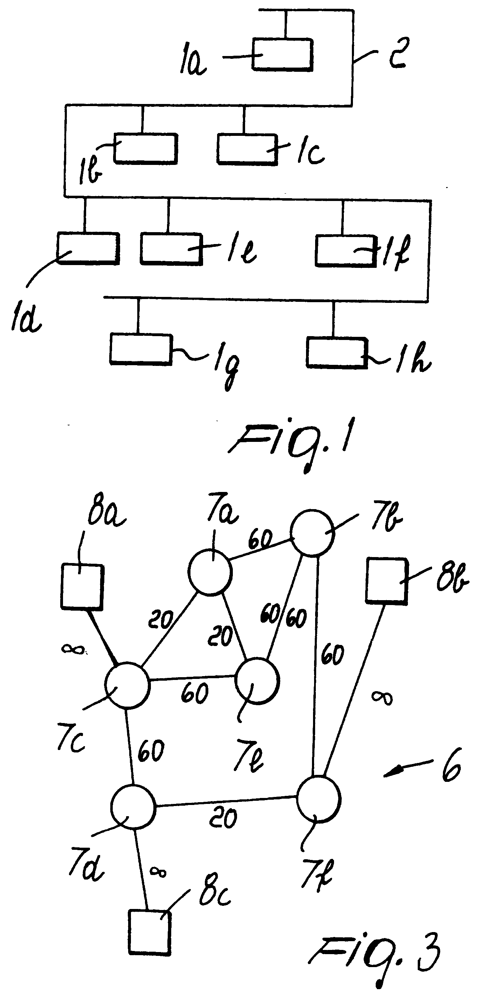

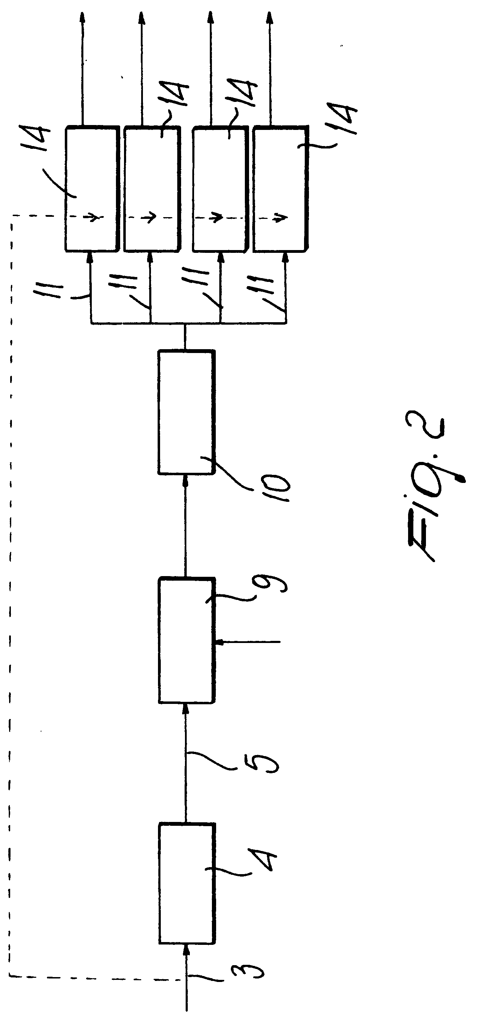

With reference to the aforesaid figures, and assuming the case is one of sequential logic control, Fig. 1 shows a block diagram in which devices 1a-1h, equipped with microprocessors and installed following a distributed logic, are connected to one another using a field bus 2 that enables data to be carried from one device to another.

Fig. 2, on the other hand, is a diagrammatic illustration of the various different phases in the procedure as in the present invention that starts with a first phase in which the global control logic functions of the entire system (an electrical distribution line and its devices, for example, as set forth above), described using a suitable programming language, are translated into a graph-type format that will then be used for the subsequent partitioning of the global logic functions.

In Fig. 2, reference number 3 indicates the global logic functions described using a programming language, reference number 4 indicates the translation phase of the global logic functions into graph form and reference number 5 indicates the obtaining of the graph.

The graph obtained in this way is a weighted graph in that each arc connecting two nodes of the graph to one another is assigned a weight following predetermined rules, as described hereinafter.

This graph form translation phase may not be present if a programming language is used that is, for example, able to represent a given program consisting in a logical sequence of instructions directly in the form of a graph.

Thus the translation into graph form would not be necessary if a suitable programming language is used, that could also be created specially for the purpose.

The construction of the graph, indicated by way of example in Fig. 3 with reference number 6, is based on the following rules.

Every elementary instruction or group of instructions in the program that is translated into graph form constitutes a graph node (called an instruction node) and similarly every program variable constitutes another graph node (called a variable node).

This translation into graph nodes is illustrated by way of example in Fig. 3, in which the graph, indicated by reference number 6, includes both instruction nodes and variable nodes (and device nodes as described hereinafter) and arcs.

For simplicity's sake, the graph nodes have been indicated by reference numbers 7a-7f without distinguishing between function nodes and variable nodes. The number of graph nodes is obviously not limited to the number shown in Fig. 3, but depends on the program that needs to be translated.

The arcs in the graph have different meanings depending on whether the arc connects a variable node and an instruction node to one another or two instruction nodes to one another. In the former case, the arc indicates that the instruction (defined by the instruction node) uses that variable (defined by the variable node) and the arc is known as a data flow arc.

In the second case, on the other hand, the arc describes the fact that the second instruction (indicated by an instruction node) is executed after the first instruction (indicated by an instruction node) and is known as a control flow arc.

The weights assigned to each arc indicate the "cost" that must be borne to connect the two nodes that form the arc's starting point and destination point to one another.

Different criteria can be followed to assign the cost, including, for example, evaluating the average time delay due to the need to transfer the data using the field bus 2. In this case, for example, it is possible to define the weight for the data flow arcs as the average time required to transfer a variable (defined by the variable node) on the network. The average transfer time depends on the characteristics of the communication network (field bus 2).

The weight of the control flow arcs, on the other hand, can, for example, be defined as the average time required to transfer control to another device.

It is naturally possible to use other procedures for assigning the weights, which differ from the procedure described above.

The graph 6 obtained in this way is at this point completed with information on the system's distributed devices. New nodes are added to the graph for this purpose, which represent the physical devices available (indicated by reference numbers 8a, 8b and 8c in Fig. 3).

The graph completion phase is indicated by reference number 9 and makes it possible to define the topology of the distributed network by specifying the devices present.

A number of the variables previously defined as nodes are input or output variables of a given device and these nodes are therefore connected to the related device using an arc marked in Fig. 3 by the symbol $\infty$ indicating a weight of infinite value. An infinite weight is then assigned to the arc connecting the variable node to the device node.

For example, in Fig. 3, the weight $\infty$ is assigned across device nodes 8a, 8b and 8c and variable nodes 7c, 7b and 7d respectively.

Fig. 3 thus illustrates the weighted graph obtained after the translation phase 4 and the completion phase 9.

After the graph has been created, a phase 10 for partitioning the graph itself is carried out, that enables the graph to be partitioned, assigning each node of the graph (corresponding to the global logic functions) to one of the devices in the system.

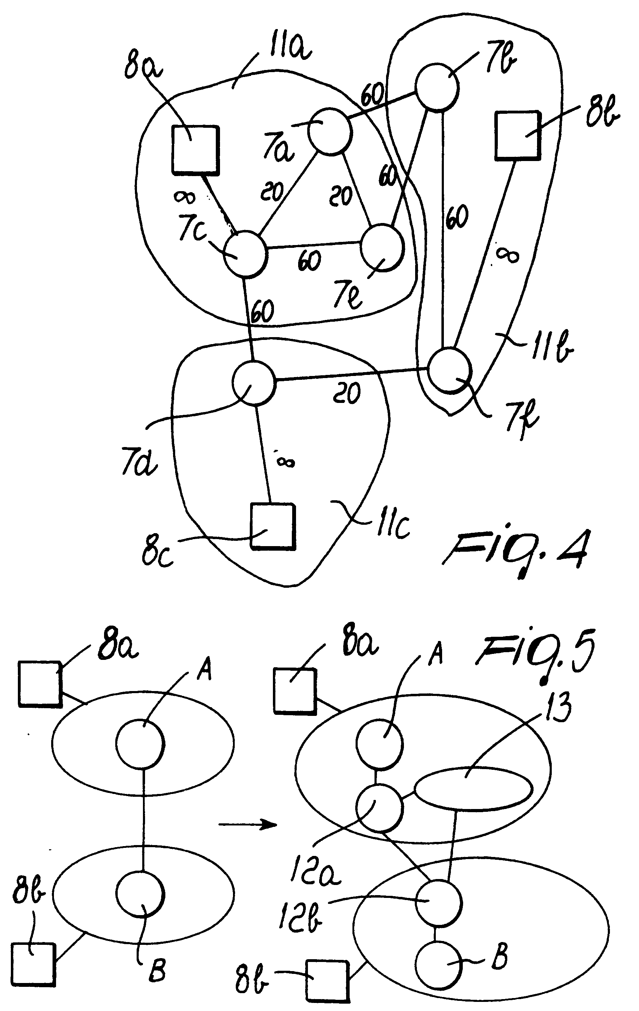

Each possible partition is assigned a cost that is the sum of the arcs connecting nodes that are assigned to several devices, as illustrated in Fig. 4.

For example, the cost of the example partition in Fig. 4 is 60+60+60+20=200, obtained considering the cost of the so-called broken arcs, which is to say the arcs that connect one set of nodes to another set after partitioning.

In practice, the set of nodes assigned to a device in the system represents a portion of the global logic functions that will subsequently be referred to a device function, indicated in Fig. 2 by reference number 11 (Fig. 4 contains device functions 11a, 11b and 11c defining a set of nodes of devices 8a, 8b and 8c respectively).

The optimal partitioning of the graph will be the partitioning out of all the different possible partitions that can be envisaged with which the minimum cost is associated. Said minimum cost is not the absolute minimum theoretically attainable, but is the one obtained using a minimization algorithm having a reasonable complexiti.

The objective of assigning each node of the graph 6 to a device following a minimum cost logic regarding the weights of the broken arcs for the connection of nodes belonging to different devices can be achieved by optimising an objective function $F= \Sigma\Sigma\ P_{ij} \cdot \cdot D_{ij}$, in which $P_{ij}$ is the weight of a genetic arc i-j and $D_{ij}$ is a function that indicates whether the arc i-j is broken or not.

The optimisation of the said objective function can be achieved by using a suitable known partitioning algorithm, such as, for example, the algorithm known as "branch and bound", or another algorithm.

After the partition phase 10, the program code associated with a device function 11 (11a-11c), is compiled in such a way that it can be executed in the corresponding device.

In order to achieve correct execution of the global program partitioned in this way in the various different devices, it is necessary to insert synchronisation code and variables by the broken arches that makes it possible for the different portions of program code assigned to the different devices to be executed maintaining the original sequence present in the initial global program.

This phase is carried out for arcs that connect instruction nodes to one another in order to assign a sequence to the different instructions.

For instance, in a very simple case, following execution of the code for node A of device 8a, for example, a boolean synchronisation variable 13 is set by the synchronisation code 12a said variable 13 being then transmitted to the device 8b.

Device 8b in its turn waits for the boolean variable 13 to be set (synchronisation code 12b), after which it resets this boolean variable and executes the code for node B of device 8b.

The synchronisation code, indicated genetically by the reference number 12, thus makes it possible to reinsert the time sequence of the instructions present in the original global program.

The phase marked by reference number 14 in Fig. 2 corresponds to the extraction of the portion of code for each device and the insertion of the necessary synchronisation code. The phase 14 may possibly request the use of information contained in the source code 3.

The step involving the extraction of the portion of code corresponds to a conversion of the portion of partitioned graph into a program code that can be interpreted by a normal compiler and can therefore be executed.

This "decoding" step could be eliminated if one has a compiler that is able to read a program code in the form of a partitioned graph.

It has been noted in practice that the procedure as in the invention performs its predetermined task in every way since it enables control functions to be partitioned automatically, assigning each distributed device, equipped with its own microprocessor, the portion of program code for it, starting from a global control program.

It is in this way possible to eliminate the fixed central control unit usually employed in the known systems and to instead perform an installation using a controller (installation "tool") that does not subsequently remain physically present in the field but is taken away at the end of the installation.

The procedure conceived in this way is open to many modifications and variants, all of which fall within the concept of the invention. Furthermore all the details may be substituted by other elements that are technically equivalent.

**Claims**

1. Procedure for partitioning control functions in distributed systems, particularly for the execution of sequential logic functions, characterised by the fact that it includes the phases that consist in:

   starting with a representation, in the form of a weighted graph containing nodes and arcs, of global control logic functions for a distributed system expressed in a formal language, completing the graph with further nodes representing the devices physically present in the system and arcs representing a logical connection between the said existing devices and said existing nodes in the weighted graph; automatically partitioning the said weighted graph, now completed, assigning each node of the said graph to the devices present in the system obtaining device functions; and compiling the said device functions, having previously added synchronisation codes for reinserting the execution sequence present in the said control logic functions.

2. Procedure as in claim 1, characterised by the fact that the said representation in graph form is obtained by translating the said global control functions written in formal language into graph form, the said graph featuring nodes and arcs.

3. Procedure as in claim 2, characterised by the fact that each instruction or group of instructions of the said global control functions is represented by a node of the said graph, and each variable of the said global control functions is represented by a node and arcs that are specified for the connections of the said nodes.

4. Procedure as in claim 3, characterised by the fact that the said arcs include arcs both for connections between nodes representing variables and nodes representing instructions, and for arcs connecting two instruction nodes.

5. Procedure as in one or more of the above claims, characterised by the fact that a weight is assigned to each arc connecting two nodes in order to obtain a weighted graph, with the said weight representing the cost resulting from the fact that the said two nodes are allocated to two different devices of the said distributed system.

6. Procedure as in one or more of the above claims, characterised by the fact that the said graph completion phase involves the addition of further nodes to the said graph representing the devices physically present in the distributed system.

7. Procedure as in one or more of the above claims, characterised by the fact that the device nodes are connected using arcs to certain nodes representing variables and to certain nodes representing instructions, the said arcs representing a logical connection between the said devices and the said nodes.

8. Procedure as in one or more of the above claims, characterised by the fact that the said partitioning phase of the said graph is carried out minimising the cost of the said graph, the cost corresponding to the sum of the costs of the broken arcs, the said broken arcs being arcs that connect nodes allocated to different devices to one another.

9. Procedure as in one or more of the above claims, characterised by the fact that the said phase for compiling the said device functions obtained following partitioning of the said graph includes translating the said graph portions assigned to the various different devices in order to obtain a program code in executable format, and adding synchronisation codes and variables to restore the logical sequence of the instructions present in the initial global control logic functions.

10. Use of a procedure for partitioning control functions as in claim 1 in a distributed system consisting of a multiplicity of distributed devices equipped with on-board microprocessors, connected to one another by a communication channel.

11. Use as in claim 10, characterized by the fact that the said communication channel is a field bus.

Fig. 1

Fig. 3

Fig. 2

Fig. 4

Fig. 5